(19) Europäisches Patentamt / European Patent Office / Office européen des brevets

(11) **EP 3 381 881 A1**

(12) **EUROPEAN PATENT APPLICATION**
published in accordance with Art. 153(4) EPC

(43) Date of publication:
**03.10.2018 Bulletin 2018/40**

(51) Int Cl.:
*C03C 27/12* (2006.01)  *B32B 17/06* (2006.01)
*B60J 1/00* (2006.01)  *E06B 3/67* (2006.01)
*E06B 5/00* (2006.01)

(21) Application number: **16868629.3**

(22) Date of filing: **24.11.2016**

(86) International application number:
**PCT/JP2016/084809**

(87) International publication number:
**WO 2017/090686 (01.06.2017 Gazette 2017/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.11.2015 JP 2015231011**

(71) Applicant: **AGC Inc.**
**Tokyo 100-8405 (JP)**

(72) Inventors:
• **MUROFUSHI Chieko**
  **Tokyo 100-8405 (JP)**
• **MUROFUSHI Hidenobu**
  **Tokyo 100-8405 (JP)**

(74) Representative: **Müller-Boré & Partner**
**Patentanwälte PartG mbB**
**Friedenheimer Brücke 21**
**80639 München (DE)**

(54) **LAMINATED GLASS, WINDOW GLASS FOR AUTOMOBILES, AND WINDOW GLASS FOR BUILDINGS**

(57)    This laminated glass (1) is provided with a first glass sheet (10), a first transparent adhesive layer (16), a transparent heat-insulation layer (14) having continuous pores, a second transparent adhesive layer (18), and a second glass sheet (12), in that order. The value of A in formula (1), namely $A=D^3 Pd_i$, is not more than $7.0\times10^5$, and the value of B in formula (2) is at least 35 (in the formulae, D is the pore size (nm), P is the porosity, $d_i$ is the thickness (mm) of the transparent heat-insulation layer, $d_g$ is the total (mm) thickness of the glass sheets, and $d_a$ is the total (mm) thickness of the transparent adhesive layers).
[Math. 1]

$$A = D^3 Pd_i \quad (1) \tag{1}$$

$$B = d_g + 3.3d_a + 0.75d_i \left(\frac{D + 260.8}{0.026D}\right)^P \quad (2) \tag{2}$$

FIG. 1

## Description

Technical Field

The present invention relates to a laminated glass, a window glass for automobiles, and a window glass for buildings.

Background Art

Laminated glasses obtained by sticking two glass plates to each other with an interlayer have excellent penetration resistance and are less apt to shatter upon breaking. Laminated glasses are hence used as vehicular window glasses for automobiles, etc., window glass for buildings, and the like.

Laminated glasses are known in which the interlayers include an infrared-reflecting layer or infrared-absorbing layer for inhibiting an interior of the vehicle or room from increasing in temperature due to solar radiation (Patent Documents 1 to 4).

Such a laminated glass including an interlayer which includes an infrared-reflecting layer or infrared-absorbing layer is capable of inhibiting infrared rays from entering the inside of the vehicle or room from outside. However, the laminated glass is unable to inhibit the conduction of heat through the laminated glass itself and, hence, has the following problem. In the summer season, outside heat is conducted by the laminated glass to come into the inside of the vehicle or room, and in the winter season, inside heat generated by heating is conducted by the laminated glass and goes outside the vehicle.

A laminated glass which inhibits the conduction of heat through the laminated glass itself, that is, which has heat-insulating properties, has been proposed. This laminated glass includes an interlayer composed of a first layer, which contains hollow fine silica particles, and a second layer and a third layer, and the first layer lies therebetween (Patent Document 5).

Prior Art Documents

Patent Documents

Patent Document 1: International Publication WO 2013/168714
Patent Document 2: Japanese Patent No. 4848872
Patent Document 3: JP-A-2007-148330
Patent Document 4: JP-A-2010-222233
Patent Document 5: International Publication WO 2012/063881

Summary of the Invention

Problem that the Invention is to Solve

However, the laminated glass of Patent Document 5 has a high thermal conductivity because the first layer, which contains hollow fine silica particles, has been designed to be thin in order to maintain a transmittance, resulting in insufficient heat-insulating properties.

The present invention provides a laminated glass having high transparency and excellent heat-insulating properties, and a window glass for automobiles and a window glass for buildings.

Means for Solving the Problems

The present invention includes the following embodiments.

<1> A laminated glass including, in the following order, a first glass plate, a first transparent adhesive layer, a transparent heat-insulating layer having interconnected pores, a second transparent adhesive layer, and a second glass plate, and having a value of A represented by the following expression (1) of $7.0 \times 10^5$ or smaller and a value of B represented by the following expression (2) of 35 or larger.
[Math. 1]

$$A = D^3 P d_i \quad (1)$$

$$B = d_g + 3.3 d_a + 0.75 d_i \left( \frac{D + 260.8}{0.026D} \right)^P \quad (2)$$

In the expressions, D is a pore diameter (nm) of the interconnected pores of the transparent heat-insulating layer, P is a porosity of the transparent heat-insulating layer, $d_i$ is a thickness (mm) of the transparent heat-insulating layer, $d_g$ is a sum (mm) of a thickness of the first glass plate and a thickness of the second glass plate, and $d_a$ is a sum (mm) of a thickness of the first transparent adhesive layer and a thickness of the second transparent adhesive layer.

<2> The laminated glass according to <1>, wherein the value of A is $2.5 \times 10^5$ or smaller and the value of B is 85 or larger.

<3> The laminated glass according to <1> or <2>, wherein the transparent heat-insulating layer has an elastic modulus in compression of 4.3 MPa or higher.

<4> The laminated glass according to any one of <1> to <3>, wherein the transparent heat-insulating layer is an aerogel sheet.

<5> The laminated glass according to any one of <1> to <4>, wherein the transparent heat-insulating layer contains a filler.

<6> The laminated glass according to any one of <1> to <5>, wherein the thickness of the transparent heat-insulating layer is 0.2 to 10 mm.

<7> The laminated glass according to any one of <1> to <6>, wherein the thickness of the first glass plate and the thickness of the second glass plate are each 0.1 to 6 mm.

<8> The laminated glass according to any one of <1> to <7>, wherein the thickness of the first transparent adhesive layer and the thickness of the second transparent adhesive layer are each 0.1 to 3 mm.

<9> A window glass for automobiles which includes the laminated glass according to any one of <1> to <8>.

<10> A window glass for buildings which includes the laminated glass according to any one of <1> to <8>.

Effects of the Invention

The laminated glass, window glass for automobiles, and window glass for buildings of the invention have high transparency and excellent heat-insulating properties.

Brief Description of the Drawing

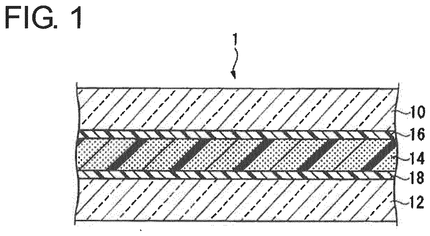

[FIG. 1] FIG. 1 is a cross-sectional view illustrating one embodiment of the laminated glass of the invention.

Modes for Carrying Out the Invention

The following definitions of terms apply in this description and the claims.

The term "pores" means holes which are voids formed in a heat-insulating material.

The term "interconnected pores" means pores which communicate with one another.

The term "transparent" means an ability to transmit light.

"Pore diameter" is a value of pore diameter corresponding to the 50% height of a cumulative pore volume plot obtained through an examination with a pore distribution analyzer by the nitrogen adsorption method and through analysis of the adsorption by the BJH (Barrett-Joyner-Halenda) method, this pore diameter value being generally called median diameter.

"Porosity" is a value determined from the volume of a transparent heat-insulating layer of before pressing and the volume of the transparent heat-insulating layer which has undergone pressing under the conditions of a temperature of 200°C, pressure of 35 MPa, and period of 10 minutes, using the following equation.

$$\text{Porosity} = 1 - [(\text{volume of transparent heat-insulating layer of after pressing})/(\text{volume of transparent heat-insulating layer of before pressing})]$$

"Transmittance" is a value measured in accordance with JIS R 3106:1998 "Test methods for transmittance/reflectance/emissivity/solar heat gain coefficient of flat glasses" (ISO 9050:1990).

"Coefficient of overall heat transmission (U value)" is a value determined in accordance with JIS R 3107:1998 "Calculation methods for thermal resistance of flat glasses and for coefficient of overall heat transmission in buildings" (ISO 10292:1994) and JIS R 3209:1998 "Double glazing".

"Elastic modulus in compression" is a value determined in accordance with JIS K 7181:2011 "Plastics-Method for determining compressive properties" (ISO 604:2002).

<Laminated Glass>

FIG. 1 is a cross-sectional view illustrating one embodiment of the laminated glass of the invention.

The laminated glass 1 includes: a first glass plate 10; a second glass plate 12; a transparent heat-insulating layer 14 having interconnected pores and interposed between the first glass plate 10 and the second glass plate 12; a first transparent adhesive layer 16, with which the first glass plate 10 has been stuck to the transparent heat-insulating layer 14; and a second transparent adhesive layer 18, with which the second glass plate 12 has been stuck to the transparent heat-insulating layer 14.

(Glass Plates)

The materials of the first glass plate and second glass plate (hereinafter sometimes referred inclusively to as glass plates) may be inorganic glasses or organic glasses. Inorganic glasses are preferred from the standpoints of weatherability, rigidity, solvent resistance, etc. The materials of the first glass plate and second glass plate may be the same or different.

Examples of the inorganic glasses include soda-lime glasses, borosilicate glasses, alkali-free glasses, and silica glass. Soda-lime glasses are suitable.

Examples of the organic glasses include polycarbonates and acrylic resins.

The glass plates may be colorless transparent glass plates or colored transparent glass plates. Preferred are heat-ray-absorbing glass plates having a high iron content (blue glass plates or green glass plates).

Tempered glass plates may be used as the glass plates in order to enhance safety. As the tempered glass plates, use can be made of tempered glass plates obtained by tempering or chemical strengthening.

The shape of each glass plate may be a curved shape or a flat shape. Since many window glasses for automobiles are curved, the glass plates frequently have a curved shape when the laminated glass of the invention is for use as a window glass for automobiles.

The thickness of each glass plate is preferably 0.1 to 6 mm, more preferably 1 to 3 mm. The thicknesses of the first glass plate and second glass plate may be the same or different. The thickness of each glass plate in the invention is a geometric thickness. Hereinafter, the same applies to the thickness of each of the layers, other than the glass plates, included in the laminated glass of the invention.

(Transparent Adhesive Layers)

The materials of the first transparent adhesive layer and second transparent adhesive layer (hereinafter sometimes referred inclusively to as transparent adhesive layers) may be any transparent resins capable of bonding the glass plates to the transparent heat-insulating layer. Examples of the transparent resins include poly(vinyl butyral), ethylene-vinyl acetate copolymers, and commercial optically clear adhesives (OCAs). Preferred are poly(vinyl butyral) and ethylene-vinyl acetate copolymers. For use in applications where penetration resistance is required, such as, for example, window glasses for automobiles, poly(vinyl butyral) is more preferred. The materials of the first transparent adhesive layer and second transparent adhesive layer may be the same or different. Each transparent adhesive layer may have a multilayer structure made up of two or more layers of the same or different materials.

The transparent adhesive layers may contain an infrared absorber, ultraviolet absorber, antioxidant, light stabilizer, colorant, etc., so long as such ingredients do not lessen the effects of the invention.

The thickness of each transparent adhesive layer is preferably 0.1 to 3 mm, more preferably 0.3 to 0.8 mm. The thicknesses of the first transparent adhesive layer and second transparent adhesive layer may be the same or different.

(Transparent Heat-insulating Layer)

The transparent heat-insulating layer has an elastic modulus in compression of preferably 4.3 MPa or higher, more preferably 12 MPa or higher, even more preferably 120 MPa or higher. In cases where the elastic modulus in compression thereof is not less than the lower limit of that range, the transparent heat-insulating layer has excellent mechanical strength and can withstand the compression which the heat-insulating layer undergoes when stuck to glass plates in producing the laminated glass.

The thickness of the transparent heat-insulating layer is preferably 0.2 to 10 mm, more preferably 0.5 to 6 mm, even more preferably 1 to 3 mm. In cases where the thickness of the transparent heat-insulating layer is not less than the lower limit of that range, the laminated glass has better heat-insulating properties. In cases where the thickness of the transparent heat-insulating layer is not larger than the upper limit of that range, the laminated glass has higher transparency.

Examples of the transparent heat-insulating layer having interconnected pores include: an aerogel sheet; a sheet obtained by dispersing fine particles in a matrix and then dissolving away the fine particles to form interconnected pores; a sheet obtained by forming a polymer alloy formed of two or more polymers, causing the polymer alloy to undergo nano-phase separation, and then dissolving away one or more polymers to form interconnected pores; and a sheet obtained by forming closed cells by foaming and then collapsing the walls of the closed cells to form interconnected pores.

The transparent heat-insulating layer is preferably an aerogel sheet from the standpoint of the ease of regulating both the porosity of the transparent heat-insulating layer and the pore diameter of the interconnected pores, these properties being necessary for enabling the laminated glass to combine transparency and heat-insulating properties, and from the standpoint that this sheet is easy to produce and is inexpensive and lightweight.

A filler may be incorporated into the transparent heat-insulating layer, i.e., the transparent heat-insulating layer may contain a filler, in order to impart, to the transparent heat-insulating layer, an elastic modulus in compression that makes the transparent heat-insulating layer capable of withstanding the compression which the heat-insulating layer undergoes when stuck to glass plates in producing the laminated glass.

The filler may be an inorganic filler or an organic filler. Examples of the inorganic filler include inorganic fine particles and flaky clays. Examples of the inorganic fine particles include: metal nanoparticles such as gold nanoparticles and silver nanoparticles; metal oxide particles such as alumina particles, copper oxide particles, iron oxide particles, cobalt oxide particles, titanium oxide particles, zinc oxide nanoparticles, zirconium oxide particles, and cerium oxide particles; and silicon nanoparticles, silicon carbide nanoparticles, titanium carbide particles, gold nanowires, silver nanowires, titanium oxide nanowires, zinc oxide nanowires, gold nanorods, silicon carbide nanofibers, hollow silica, and solid silica. Examples of the flaky clays include synthetic saponite, montmorillonite, nanotalc, and micromica. Examples of the organic filler include cellulose nanofibers, carbon nanofibers, aramid nanofibers, and polyoxybenzoyl whiskers. From the standpoints of maintaining the transparency and improving the strength, flaky clays such as saponite and montmorillonite are preferred as the filler.

(Aerogel Sheet)

An aerogel sheet is a sheet formed by replacing a solvent contained in a gel with a gas, and has a three-dimensional, finely porous structure constituted of a reticulated matrix which has interconnected pores in the network thereof. The aerogel involves xerogel and cryogel.

Examples of the material of the aerogel include metal oxides, crosslinked polymers, and nanofibers.

Examples of the metal oxides include silica, alumina, titania, and zirconia.

Examples of the crosslinked polymers include a cured polymer obtained from resorcinol/formaldehyde, a cured polymer obtained from a photocurable monomer or oligomer, a cured object obtained from a thermosetting monomer or oligomer, a polymer obtained by dissolving a solvent-soluble resin in a solvent and then crosslinking the resin, and a polymer obtained by swelling a resin swellable in solvents and then crosslinking the resin.

Examples of the nanofibers include celluloses, living-thing-derived nanofibers, and synthetic-resin nanofibers. Examples of the celluloses include wood-derived cellulose and bacterial cellulose synthesized by bacteria. Examples of the living-thing-derived nanofibers include chitin and chitosan. Examples of the synthetic-resin nanofibers include ones obtained by forming a synthetic resin into nanofibers by electro spinning.

The aerogel is preferably a silica aerogel, a polymer aerogel, or a cellulose aerogel, and is more preferably a silica aerogel or a cellulose aerogel, from the standpoint of ease of enabling the laminated glass to combine transparency and heat-insulating properties. Even more preferred is a cellulose aerogel, from the standpoint that this aerogel is flexible and tough, is easy to bend along the glass plates, and is lightweight.

A filler may be incorporated into the aerogel, i.e., the aerogel may contain a filler, in order to impart, to the aerogel sheet, an elastic modulus in compression that makes the aerogel sheet capable of withstanding the compression which the aerogel sheet undergoes when stuck to glass plates in producing the laminated glass.

The filler may be an inorganic filler or an organic filler. Examples of the inorganic filler include inorganic fine particles and flaky clays. Examples of the inorganic fine particles include: metal nanoparticles such as gold nanoparticles and silver nanoparticles; metal oxide particles such as alumina particles, copper oxide particles, iron oxide particles, cobalt oxide particles, titanium oxide particles, zinc oxide nanoparticles, zirconium oxide particles, and cerium oxide particles; and silicon nanoparticles, silicon carbide nanoparticles, titanium carbide particles, gold nanowires, silver nanowires, titanium oxide nanowires, zinc oxide nanowires, gold nanorods, silicon carbide nanofibers, hollow silica, and solid silica. Examples of the flaky clays include synthetic saponite, montmorillonite, nanotalc, and micromica. Examples of the organic filler include cellulose nanofibers, carbon nanofibers, aramid nanofibers, and polyoxybenzoyl whiskers. From the standpoints of maintaining the transparency and improving the strength, flaky clays such as saponite and montmorillonite are preferred as the filler.

The aerogel sheet to be used may be a commercial one, or may be one produced by a known production process.

A known process for producing an aerogel includes a step of obtaining a hydrogel, a step of obtaining an organogel from the hydrogel, and a step of drying the organogel to obtain an aerogel.

Examples of methods for drying the organogel include an ordinary-pressure drying method, freeze drying method, subcritical drying method, and supercritical drying method. From the standpoint of the transparency of the aerogel, the supercritical drying method is preferred. From the standpoint of suitability for aerogel mass-production, the ordinary-pressure drying method or the freeze-drying method is preferred.

Examples of processes for producing a silica aerogel include a process including: a step in which a tetraalkoxysilane is hydrolyzed and polycondensed to obtain a hydrogel; a step in which the water in the hydrogel is replaced with an alcohol to obtain an organogel; and a step in which the organogel is subjected to supercritical drying to replace the alcohol contained in the organogel with a gas to obtain a silica aerogel.

Examples of processes for producing a polymer aerogel include a process including: a step in which resorcinol/formaldehyde or a polyfunctional monomer is polymerized in an organic solvent to obtain an organogel; and a step in which the organogel is subjected to supercritical drying to replace the organic solvent contained in the organogel with a gas to obtain a polymer aerogel.

Examples of processes for producing a cellulose aerogel include a process including: a step in which an acid is added to an aqueous dispersion of cellulose nanofibers to obtain a hydrogel; a step in which the water in the hydrogel is replaced with an alcohol to obtain an organogel; and a step in which the organogel is subjected to supercritical drying to replace the alcohol contained in the organogel with a gas to obtain a cellulose aerogel.

The step of supercritical drying is a step in which the organogel is dried in a supercritical atmosphere. The supercritical drying method utilizes the supercritical state of carbon dioxide, methanol, ethanol, or the like. It is preferred to conduct the supercritical drying by bringing supercritical carbon dioxide into contact with the organogel under the conditions of, for example, a temperature of 35 to 60°C and a pressure of 7.4 to 30 MPa.

In the case of conducting supercritical drying, the organic solvent contained in the organogel is preferably ethanol, methanol, or isopropanol.

(Design of the Transparent Heat-insulating Layer)

The laminated glass is made to combine transparency and heat-insulating properties by regulating values of A and B, which will be described later, so as to be within specific ranges. This can be attained by regulating both the pore diameter of the interconnected pores of the transparent heat-insulating layer and the porosity of the transparent heat-insulating layer.

The porosity is determined by multiplying the pore diameter by the number density of pores. The pore diameter depends on the rate of gelation of silica in aerogel production or on the fiber diameter of the nanofibers, the kind of functional group of the cellulose, etc. The number density depends on the concentration of the starting material, etc.

Consequently, the transparent heat-insulating layer can be made to have interconnected pores having a reduced pore diameter, for example, by: increasing the denseness of the silica gel by appropriately lowering the temperature or adding a catalyst; using finer nanofibers (in the case of cellulose, for example, fibrillating the fiber fibrils as much as possible); or introducing into cellulose a functional group compatible with water (e.g., carboxylic acid salt).

For heightening the porosity of the transparent heat-insulating layer without changing the pore diameter of the interconnected pores of the transparent heat-insulating layer, it is necessary to increase the number density. This can be attained, for example, by lowering the solid concentration of the hydrogel or organogel.

A transparent heat-insulating layer having interconnected pores and having an elastic modulus in compression of 4.3 MPa or higher can be obtained by making the matrix have an elastic modulus in compression of 110 MPa or higher. Even when the matrix has an elastic modulus in compression lower than that, the desired transparent heat-insulating layer can be obtained by adding a filler.

(Value of A)

The laminated glass of the invention has a value of A represented by the expression (1) shown below of $7.0 \times 10^5$ or smaller, preferably $2.5 \times 10^5$ or smaller, more preferably $1.0 \times 10^5$ or smaller.

In cases where the value of A is $7.0 \times 10^5$ or smaller, the laminated glass has a transmittance of 50% or higher. In cases where the value of A is $2.5 \times 10^5$ or smaller, the laminated glass has a transmittance of 70% or higher.

[Math. 2]

$$A = D^3 P d_i \quad (1)$$

Explained below are the reason why the laminated glass has a transmittance of 50% or higher when the value of A is $7.0 \times 10^5$ or smaller and the reason why the laminated glass has a transmittance of 70% or higher when the value of A is $2.5 \times 10^5$ or smaller.

With respect to a laminated glass having a layer configuration such as that shown in FIG. 1, the thickness, refractive index, cumulative transmittance, Fresnel reflection, and internal transmittance of each of air (zeroth layer), the first glass plate (first layer), the first transparent adhesive layer (second layer), the transparent heat-insulating layer (third layer), the second transparent adhesive layer (fourth layer), the second glass plate (fifth layer), and air (sixth layer) are expressed as shown in Table 1.

[Table 1]

Table 1

| Layer configuration | | | | Thickness | Refractive index | Cumulative transmittance | Fresnel reflection | Internal transmittance |
|---|---|---|---|---|---|---|---|---|
| Zeroth layer | $\downarrow S_0$ | air | $\uparrow F_0$ | - | $n_0$ | $S_0$ | $F_0$ | $T_0$ |
| First layer | $\downarrow S_1$ | first glass plate | $\uparrow F_1$ | $d_1$ | $n_1$ | $S_1$ | $F_1$ | $T_1$ |
| Second layer | $\downarrow S_2$ | first transparent adhesive layer | $\uparrow F_2$ | $d_2$ | $n_2$ | $S_2$ | $F_2$ | $T_2$ |
| Third layer | $\downarrow S_3$ | transparent heat-insulating layer | $\uparrow F_3$ | $d_3$ | $n_3$ | $S_3$ | $F_3$ | $T_3$ |
| Fourth layer | $\downarrow S_4$ | second transparent adhesive layer | $\uparrow F_4$ | $d_4$ | $n_4$ | $S_4$ | $F_4$ | $T_4$ |
| Fifth layer | $\downarrow S_5$ | second glass plate | $\uparrow F_5$ | $d_5$ | $n_5$ | $S_5$ | $F_5$ | $T_5$ |
| Sixth layer | $\downarrow S_6$ | air | | - | $n_6$ | $S_6$ | - | $T_6$ |

First, from a transmittance of the laminated glass, a transmittance of the transparent heat-insulating layer which is necessary for the transmittance of the laminated glass is determined. This derivation is intended to determine a relational expression, which shows what value of transmittance $T_3$ is required of the transparent heat-insulating layer when a necessary numerical value of the transmittance $S_6$ of the laminated glass has been designated.

With respect to Fresnel reflection, the Fresnel reflection $F_1$ at the interface between, for example, a layer having a refractive index $n_1$ and a layer having a refractive index $n_2$ is represented by the following expression.

[Math. 3]

$$F_1 = \left( \frac{n_1 - n_2}{n_1 + n_2} \right)^2$$

In the case where the cumulative transmittance $S_0$ of the incident-side air is taken as 1, the cumulative transmittances of the other layers are represented by the following expressions (3).
[Math. 4]

$$S_1 = (S_0 - F_0)T_1$$
$$S_2 = (S_1 - F_1)T_2 = ((S_0 - F_0)T_1 - F_1)T_2$$
$$S_3 = (S_2 - F_2)T_3 = (((S_0 - F_0)T_1 - F_1)T_2 - F_2)T_3$$
$$S_4 = (S_3 - F_3)T_4 = ((((S_0 - F_0)T_1 - F_1)T_2 - F_2)T_3 - F_3)T_4 \quad\quad (3)$$
$$S_5 = (S_4 - F_4)T_5 = (((((S_0 - F_0)T_1 - F_1)T_2 - F_2)T_3 - F_3)T_4 - F_4)T_5$$
$$S_6 = (S_5 - F_5)T_6 = ((((((S_0 - F_0)T_1 - F_1)T_2 - F_2)T_3 - F_3)T_4 - F_4)T_5 - F_5)T_6$$

Since the purpose is to determine a relationship between S6 and $T_3$, the expressions (3) are rearranged while directing attention to $T_3$, thereby giving the expression (4) shown below. The rearrangement was made on the assumption that $F_0=F_5$, $F_1=F_4$, and $F_2=F_3$.
[Math. 5]

$$T_3 = \frac{((S_6 + F_0)/T_5 + F_1/T_4) + F_2}{((1 - F_0)T_1 - F_1)T_2 - F_2} \quad (4)$$

The glass plates and the transparent adhesive layers are sufficiently transparent when having thicknesses of up to about 10 mm. $T_1$, $T_2$, $T_4$, and $T_5$ can hence be approximated by 1. Consequently, expression (4) is represented by the following expression (5).
[Math. 6]

$$T_3 = \frac{S_6 + F_0 + F_1 + F_2}{1 - F_0 - F_1 - F_2} \quad (5)$$

At a wavelength of 500 nm, the refractive indexes $n_1$ and $n_5$ of the ordinary glass plates and the refractive indexes $n_2$ and $n_4$ of the transparent adhesive layers are about 1.5. Meanwhile, in the worst case where the refractive index of the transparent heat-insulating layer, although varying depending on the material, is regarded as $n_3=1.0$, which is the same as that of air, then no problem arises in theory in any cases. Consequently, the Fresnel reflection at each interface can be approximated as follows.

[Math. 7]

$$F_0 = \left(\frac{n_0 - n_1}{n_0 + n_1}\right)^2 \approx \left(\frac{1-1.5}{1+1.5}\right)^2 = 0.04$$

$$F_1 = \left(\frac{n_1 - n_2}{n_1 + n_2}\right)^2 \approx 0$$

$$F_2 = \left(\frac{n_2 - n_3}{n_2 + n_3}\right)^2 \approx \left(\frac{1.5-1}{1.5+1}\right)^2 = 0.04$$

Expression (5) is hence represented by the following expression.

[Math. 8]

$$T_3 = \frac{S_6 + 0.08}{0.92}$$

$T_3$ is the transmittance of the transparent heat-insulating layer and is hence expressed by $T_i$, while $S_6$ is the transmittance of the laminated glass and is hence expressed by $T_L$. Then, the above expression is represented by the following expression (6).

[Math. 9]

$$T_i = \frac{T_L + 0.08}{0.92} \quad (6)$$

Expression (6) makes it possible to calculate the transmittance $T_i$ which the transparent heat-insulating layer is required to have for attaining the desired transmittance $T_L$ of the laminated glass.

Next, a relationship is determined among the pore diameter D of the interconnected pores of the transparent heat-insulating layer, the porosity P of the transparent heat-insulating layer, the thickness $d_i$ of the transparent heat-insulating layer, and the transmittance $T_L$ of the laminated glass.

The transmittance $T_i$ of the transparent heat-insulating layer is represented by the expression (7) shown below, where $I_0$ is an intensity of incident light entering the transparent heat-insulating layer, I is an intensity of transmitted light which has passed through the transparent heat-insulating layer, σ is a scattering cross-sectional area of the interconnected pores of the transparent heat-insulating layer, N is number of pores per unit volume of the transparent heat-insulating layer, and $d_i$ (mm) is a thickness of the transparent heat-insulating layer (Kōbunshi Ronbun-shū, Vol.67, No.7, pp.390-396 (2010)).

[Math. 10]

$$-\log_{10}\left(\frac{I}{I_0}\right) = -\log_{10} T_i = \sigma N d_i \quad (7)$$

In the case where the pore diameter of the interconnected pores of the transparent heat-insulating layer is smaller than the wavelength of the light, the Rayleigh scattering applies. The scattering cross-sectional area σ hence is represented by the expression shown below, where D (mm) is the pore diameter and λ (nm) is the wavelength.

[Math. 11]

$$\sigma \propto \frac{D^6}{\lambda^4}$$

The number of pores N per unit volume of the transparent heat-insulating layer is represented by the following expression.

[Math. 12]

$$N = \frac{\text{Porosity}}{\text{Pore volume per pore}} = \frac{P}{\frac{4}{3}\pi\left(\frac{D}{2}\right)^3} \propto \frac{P}{D^3}$$

Expression (7) is rearranged using "meter" as the only unit of length, thereby giving the following expression (8).

[Math. 13]

$$-\log_{10} T_i = \sigma N d_i \propto \left[ \frac{\left(D \times 10^{-9}\right)^6}{\left(\lambda \times 10^{-9}\right)^4} \right] \times \left[ \frac{P}{\left(D \times 10^{-9}\right)^3} \right] \times \left[ d_i \times 10^{-3} \right] = \frac{D^3 P d_i}{\lambda^4} \times 10^6 \quad (8)$$

The proportional constant is indicated by C, and expression (8) is then represented by the expressions (9), (10), and (11) shown below. Expressions (9), (10) and (11) are equivalent.
[Math. 14]

$$C \times \left( -\log_{10} T_i \right) = \frac{D^3 P d_i}{\lambda^4} \quad (9)$$

$$C = \frac{D^3 P d_i}{\lambda^4 \left( -\log_{10} T_i \right)} \quad (10)$$

$$T_i = 10^{-\left( \frac{D^3 P d_i}{C \lambda^4} \right)} \quad (11)$$

Expression (6) is substituted into expression (10), thereby giving the following expression (12).
[Math. 15]

$$C = \frac{D^3 P d_i}{\lambda^4 \left( -\log_{10} T_i \right)} = \frac{D^3 P d_i}{\lambda^4 \left( -\log_{10} \left( \frac{T_L + 0.08}{0.92} \right) \right)} \quad (12)$$

Laminated glasses were produced under various conditions and each examined for D, P, $d_i$, and transmittance $T_L$ at a wavelength of 500 nm, and the values of these properties were substituted into expression (12) to calculate the value of C. Thus, the results shown in Table 2 were obtained. The wavelength need not be 500 nm. However, wavelengths shorter than that render the transmittance prone to be affected by impurities, while wavelengths longer than that render the influence of scattering less detectable. Hence, transmittance $T_L$ at a wavelength of 500 nm was used for evaluation.

[Table 2]

Table 2

| | Example | | | | | | | |
|---|---|---|---|---|---|---|---|---|
| | 1 | 2 | 3 | 4 | 5 | 6 | 7 | 8 |
| Pore diameter D (nm) | 90 | 91 | 49 | 65 | 32 | 28 | 51 | 50 |
| Porosity P | 0.92 | 0.74 | 0.92 | 0.59 | 0.95 | 0.94 | 0.90 | 0.89 |
| Thickness of transparent heat-insulating layer $d_i$ (mm) | 1.0 | 1.2 | 6.0 | 2.0 | 2.2 | 0.5 | 1.2 | 2.0 |
| Total thickness of glass Plates $d_g$ (mm) | 2.0 | 4.0 | 4.0 | 4.0 | 4.0 | 12.0 | 6.0 | 4.0 |
| Total thickness of transparent adhesive layers $d_a$ (mm) | 0.76 | 0.76 | 0.20 | 0.76 | 0.20 | 0.76 | 3.80 | 1.52 |
| Transmittance of laminated glass $T_L$ (%) | 50.9 | 50.3 | 52.6 | 67.3 | 79.9 | 83.4 | 75.3 | 71.6 |
| $C/10^{-5}$ calculated with expression (12) | 5.54 | 5.54 | 5.73 | 5.97 | 5.53 | 5.40 | 5.33 | 5.68 |

The values of C obtained from found values were averaged to obtain C=5.6×10⁻⁵. Consequently, expression (12) is represented by the following expression (13).
[Math. 16]

$$D^3 Pd_i = 5.6 \times 10^{-5} \times \lambda^4 \times \left( -\log_{10}\left( \frac{T_L + 0.08}{0.92} \right) \right) = A \quad (13)$$

For example, in the case where the transmittance $T_L$ of the laminated glass is 50%, the numerical value within parentheses in expression (13) is as follows.

[Math. 17]

$$-\log_{10}\left( \frac{T_L + 0.08}{0.92} \right) = -\log_{10}\left( \frac{0.5 + 0.08}{0.92} \right) = 0.20$$

In cases where the wavelength is fixed at 500 nm, the following can hence be seen. In order for the laminated glass to satisfy a transmittance $T_L$ of 50% or higher, it is only required that the pore diameter D of the interconnected pores of the transparent heat-insulating layer, the porosity P of the transparent heat-insulating layer, and the thickness $d_i$ of the transparent heat-insulating layer should have a relationship represented by the following expression (14).
[Math. 18]

$$A_{50\%} = 5.6 \times 10^{-5} \times (500)^4 \times 0.20 = 7.0 \times 10^5 \geq D^3 Pd_i = A \quad (14)$$

Likewise, in order for the laminated glass to satisfy a transmittance $T_L$ of 70% or higher, it is only required that a relationship represented by the expression (15) shown below should be satisfied. The unit of the value of A is nm³·mm.
[Math. 19]

$$A_{70\%} = 2.5 \times 10^5 \geq D^3 Pd_i = A \quad (15)$$

(Value of B)

The laminated glass of the invention has a value of B represented by the expression (2) shown below of 35 or larger, preferably 85 or larger.
In cases where the value of B is 35 or larger, the laminated glass has a coefficient of overall heat transmission (U value), which is a measure of heat-insulating properties, of 5.0 W/m²K or less. In cases where the value of B is 85 or larger, the laminated glass has a U value of 4.0 W/m²K or less.
[Math. 20]

$$B = d_g + 3.3 d_a + 0.75 d_i \left( \frac{D + 260.8}{0.026 D} \right)^P \quad (2)$$

Explained below are the reason why the laminated glass has a U value of 5.0 W/m²K or less when the value of B is 35 or larger and the reason why the laminated glass has a U value of 4.0 W/m²K or less when the value of B is 85 or larger.
The expression (16) shown below holds, where U (W/m²K) is a coefficient of overall heat transmission of the laminated glass, $h_{ext}$ (W/m²K) is a heat transfer coefficient of the exterior-side surface, $h_{in}$ (W/m²K) is a heat transfer coefficient of the interior-side surface, R (m²K/W) is a thermal resistance of each layer, $d_g$ (mm) is a total thickness of the two glass plates, $\lambda_g$ (W/mK) is a thermal conductivity of the glass plates, $d_a$ (mm) is a total thickness of the transparent adhesive layers, $\lambda_a$ (W/mK) is a thermal conductivity of the transparent adhesive layers, $d_i$ (mm) is a thickness of the transparent heat-insulating layer, and $\lambda_i$ (W/mK) is a thermal conductivity of the transparent heat-insulating layer.
[Math. 21]

$$\frac{1}{U} = \frac{1}{h_{ext}} + \sum R + \frac{1}{h_{in}} = \frac{1}{h_{ext}} + \frac{1}{h_{in}} + \frac{d_g}{\lambda_g} + \frac{d_a}{\lambda_a} + \frac{d_i}{\lambda_i} \quad (16)$$

The relationship among these is represented by the expression (17) shown below, where $\lambda_{air}$ (0.026 W/mK) is a thermal conductivity of room-temperature air, L (62.5×10$^{-9}$ m) is a mean free path, D (mm) is a pore diameter of the interconnected pores of the transparent heat-insulating layer, and $\lambda_{pore}$ (W/mK) is a thermal conductivity of the interconnected pores (G. Wei et al., International Journal of Heat and Mass Transfer (2011) 54, 2355-2366).
[Math. 22]

$$\lambda_{pore} = \frac{\lambda_{air}}{1 + \frac{2L}{D/2}} = \frac{0.026D}{D + 4L} \quad (17)$$

The thermal conductivity $\lambda_i$ of the transparent heat-insulating layer is represented by the expression shown below using b as a proportional constant, where $\lambda_{mat}$ (W/mK) is a thermal conductivity of the matrix of the transparent heat-insulating layer and P is a porosity of the transparent heat-insulating layer. The expression is derived from expression (17) using the dispersion model described in College of Industrial Technology, Nihon University, 37th (year 2004) Technical Meeting in Department of Applied Molecular Chemistry, Program 5-8 "Thermal conductivity measurement of gas hydrate imitation sediment sample".

[Math. 23]

$$\lambda_i = b \times \lambda_{pore}{}^P \times \lambda_{mat}{}^{(1-P)} = b \times \left(\frac{0.026D}{D + 4L}\right)^P \times \lambda_{mat}{}^{(1-P)}$$

The hemispheric emissivity $\varepsilon_{ext}$ of the exterior-side surface of a member is 0.837 W/m$^2$K, and the hemispheric emissivity $\varepsilon_{in}$ of the interior-side surface of the member is also 0.837 W/m$^2$K. According to a definition, a heat transfer coefficient of the exterior-side surface $h_{ext}$ and a heat transfer coefficient of the interior-side surface $h_{in}$ are hence as follows.

[Math. 24]

$$h_{ext} = 4.9 \times \varepsilon_{ext} + 16.3 = 20.4013$$
$$h_{in} = 5.4 \times \varepsilon_{in} + 4.1 = 8.6198$$

The thermal conductivity $\lambda_g$ of the glass plates is mostly 1.0 W/mK irrespective of the kinds of the glasses, while the thermal conductivities $\lambda_a$ of materials for use as the transparent adhesive layers are mostly about 0.3 W/mK. Meanwhile, the thermal conductivity $\lambda_{mat}$ of the matrix of the transparent heat-insulating layer can be taken as 1.0 W/mK in a worst case. Expression (16) is rearranged using these numerical values and using "meter" as the only unit of length, thereby obtaining the following expression (18).
[Math. 25]

$$\frac{1}{U} = \frac{1}{20.4013} + \frac{1}{8.6198} + 10^{-3}\left[\frac{d_g}{1} + \frac{d_a}{0.3} + \frac{d_i}{b}\left(\frac{D \times 10^{-9} + 260.8 \times 10^{-9}}{0.026D \times 10^{-9}}\right)^P\right]$$

$$\therefore \frac{1}{U} = 0.16503 + 10^{-3}\left[d_g + 3.3d_a + \frac{d_i}{b}\left(\frac{D + 260.8}{0.026D}\right)^P\right] \quad (18)$$

Expression (18) is rearranged and represented by B, thereby giving the following expression (19).
[Math. 26]

$$d_g + 3.3d_a + \frac{d_i}{b}\left(\frac{D+260.8}{0.026D}\right)^P = 10^3\left(\frac{1}{U} - 0.16503\right) = B \quad (19)$$

Expression (19) is changed with respect to b, which is then represented by the following expression (20).
[Math. 27]

$$b = d_i\left(\frac{D+260.8}{0.026D}\right)^P \bigg/ \left(10^3\left(\frac{1}{U} - 0.16503\right) - d_g - 3.3d_a\right) \quad (20)$$

Laminated glasses were produced under various conditions and each examined for D, P, $d_i$, $d_g$, $d_a$, and U value, and the values of these properties were substituted into the expression (20) to calculate the value of b. Thus, the results shown in Table 3 were obtained.

[Table 3]

Table 3

| | Example | | | | | | | |
|---|---|---|---|---|---|---|---|---|
| | 1 | 2 | 3 | 4 | 5 | 6 | 7 | 8 |
| Pore diameter D (nm) | 90 | 91 | 49 | 65 | 32 | 28 | 51 | 50 |
| Porosity P | 0.92 | 0.74 | 0.92 | 0.59 | 0.95 | 0.94 | 0.90 | 0.89 |
| Thickness of transparent heat-insulating layer $d_i$ (mm) | 1.0 | 1.2 | 6.0 | 2.0 | 2.2 | 0.5 | 1.2 | 2.0 |
| Total thickness of glass Plates $d_g$ (mm) | 2.0 | 4.0 | 4.0 | 4.0 | 4.0 | 12.0 | 6.0 | 4.0 |
| Total thickness of transparent adhesive layers $d_a$ (mm) | 0.76 | 0.76 | 0.20 | 0.76 | 0.20 | 0.76 | 3.80 | 1.52 |
| U value (W/m$^2$K) | 4.1 | 4.8 | 1.1 | 4.9 | 1.7 | 3.5 | 3.3 | 2.7 |
| b calculated with expression (19) | 1.350 | 1.348 | 1.340 | 1.330 | 1.340 | 1.258 | 1.359 | 1.340 |

The values of b obtained from found values were averaged to obtain b=1.333. Consequently, by substituting the value of b into the expression (19), the expression (19) is represented by the following expression (21).
[Math. 28]

$$d_g + 3.3d_a + 0.75d_i\left(\frac{D+260.8}{0.026D}\right)^P = 10^3\left(\frac{1}{U} - 0.16503\right) = B \quad (21)$$

In the case where the U value is, for example, 5.0 W/m$^2$K, the value of B is as follows.

[Math. 29]

$$B_{U5} = 10^3 \left( \frac{1}{5.0} - 0.16503 \right) = 35$$

Consequently, it can be seen that in order for the U value to satisfy 5.0 W/m$^2$K or less, it is only required that the pore diameter D of the interconnected pores of the transparent heat-insulating layer, the porosity P of the transparent heat-insulating layer, the thickness $d_i$ of the transparent heat-insulating layer, the total thickness $d_g$ of the glass plates, and the total thickness $d_a$ of the transparent adhesive layers should have a relationship represented by the following expression (22).
[Math. 30]

$$B_{U5} = 35 \leq d_g + 3.3d_a + 0.75d_i \left( \frac{D + 260.8}{0.026D} \right)^P = B \quad (22)$$

Likewise, in order for the U value to satisfy 4.0 W/m$^2$K or less, it is only required that a relationship represented by the expression (23) shown below should be satisfied. The unit of the value of B is mm.
[Math. 31]

$$B_{U4} = 85 \leq d_g + 3.3d_a + 0.75d_i \left( \frac{D + 260.8}{0.026D} \right)^P = B \quad (23)$$

(Properties of the Laminated Glass)

The transmittance of the laminated glass, with respect to light having a wavelength of 500 nm, is preferably 50% or higher, more preferably 70 to 99%, even more preferably 70 to 96%. In cases where the transmittance of light having a wavelength of 500 nm is not less than the lower limit of that range, the laminated glass has enhanced transparency. Laminated glasses in which the transmittance of light having a wavelength of 500 nm exceeds the upper limit of that range are difficult to produce.

The coefficient of overall heat transmission (U value) of the laminated glass is preferably 5.0 W/m$^2$K or less, more preferably 4.0 W/m$^2$K or less, from the standpoint of improving fuel efficiency, because current automotive laminated glasses have a U value of 5.8 W/m$^2$K.

The thickness of the laminated glass is preferably 2 to 20 mm, more preferably 3 to 10 mm, even more preferably 4 to 6 mm. In cases where the thickness of the laminated glass is not less than the lower limit of that range, this laminated glass has better heat-insulating properties and further has excellent mechanical strength. In cases where the thickness of the laminated glass is not larger than the upper limit of that range, this laminated glass is not too heavy and has excellent transparency.

(Process for producing the Laminated Glass)

The laminated glass can be produced by known processes. For example, the laminated glass can be produced by stacking, in the following order, a second glass plate, a transparent resin sheet to be a second transparent adhesive layer, a transparent heat-insulating sheet to be a transparent heat-insulating layer, a transparent resin sheet to be a first transparent adhesive layer, and a first glass plate, temporarily bonding the plates and sheets, and then heating and pressing the stack to tenaciously bond the plates and sheets. In this process, the transparent resin sheet to be a first transparent adhesive layer and the transparent resin sheet to be a second transparent adhesive layer may be of the same kind, or each may be configured of two or more sheets of different kinds.

(Other Embodiments)

The laminated glass of the invention may be any laminated glass which includes, in the following order, a first glass plate, a first transparent adhesive layer, a transparent heat-insulating layer having interconnected pores, a second transparent adhesive layer, and a second glass plate, and in which the value of A is $7.0 \times 10^5$ or smaller and the value of B is 35 or larger. The configuration thereof is not limited to that shown in the figure.

For example, the laminated glass of the invention may have a third glass plate or further have one or more other glass plates, according to need.

The laminated glass of the invention may have functional layers such as, for example, an infrared-absorbing layer and an ultraviolet-absorbing layer, other than transparent heat-insulating layers.

(Effects)

The laminated glass of the invention explained above can inhibit the temperature of the interior of the vehicle or room from rising, by the action of the transparent heat-insulating layer having interconnected pores. There is hence no need of depositing a thin metal film for inhibiting the interior temperature from rising due to solar radiation. This laminated glass consequently has radio-wave transmitting properties.

The laminated glass of the invention is highly transparent because the value of A thereof is $7.0 \times 10^5$ or smaller.

Furthermore, the laminated glass of the invention has a coefficient of overall heat transmission (U value) of 5.0 W/m$^2$K or less because the value of B is 35 or larger, and hence has excellent heat-insulating properties.

Examples

The present invention is explained below in detail by reference to Examples, but the invention is not limited by the Examples.

(Pore diameter of interconnected pores)

The pore diameter of the interconnected pores of a transparent heat-insulating layer is the value of pore diameter corresponding to the 50% height of a cumulative pore volume plot obtained through an examination with a pore distribution analyzer (3Flex-2MP, manufactured by Shimadzu Corp.) by the nitrogen adsorption method and through analysis of the adsorption by the BJH method, this pore diameter value being generally called median diameter.

(Porosity of transparent heat-insulating layer)

The porosity was determined from the volume of a transparent heat-insulating layer of before pressing and the volume of the transparent heat-insulating layer which had undergone pressing under the conditions of a temperature of 200°C, pressure of 35 MPa, and period of 10 minutes, using the following equation.

$$\text{Porosity} = 1\text{-}[(\text{volume of transparent heat-insulating layer of after}$$
$$\text{pressing})/(\text{volume of transparent heat-insulating layer of before pressing})]$$

(Elastic modulus in compression of transparent heat-insulating layer)

The elastic modulus in compression of a transparent heat-insulating layer was determined by examining the transparent heat-insulating sheet of before sticking, using a bench precision universal tester (Autograph AGS-5kNX, manufactured by Shimadzu Corp.) in accordance with JIS K 7181:2011 (ISO 604:2002).

(Transmittance of laminated glass)

The light transmittance of a laminated glass with respect to light having a wavelength of 500 nm was measured using a spectrophotometer (SolidSpec-3700DUV, manufactured by Shimadzu Corp.) in accordance with JIS R 3106:1998 (ISO 9050:1990).

(Coefficient of overall heat transmission (U value))

The U value of a laminated glass was measured using HC-074/630, manufactured by EKO Instruments Co., Ltd., in accordance with JIS R 3107:1998 and JIS R 3209:1998.

(Collapse resistance)

A transparent heat-insulating layer was examined for compressive deformation when stuck to glass plates.

Good: No compressive deformation.
Poor: Compressive deformation occurred.

(Value of A)

The value of A was determined using expression (1) and evaluated in accordance with the following criteria.

Excellent: Value of A is $2.5 \times 10^5$ or smaller.
Good: Value of A is larger than $2.5 \times 10^5$ but not larger than $7.0 \times 10^5$.
Poor: Value of A is larger than $7.0 \times 10^5$.

(Value of B)

The value of B was determined using expression (2) and evaluated in accordance with the following criteria.

Excellent: Value of B is 85 or larger.
Good: Value of B is 35 or larger but smaller than 85.
Poor: Value of B is smaller than 35.

(Comprehensive evaluation)

The laminated glass was comprehensively evaluated from the transmittance and U value thereof in accordance with the following criteria.

Excellent: Transmittance of 70% or higher and U value of 4.0 $W/m^2K$ or less.
Good: Transmittance of 50% or higher and U value of 5.0 $W/m^2K$ or less.
Poor: Transmittance less than 50% or U value less than 5.0 $W/m^2K$.

(Example 1)

One gram of tetramethoxysilane, 4 g of ethanol, 4 g of water, 0.5 g of urea, and 0.5 g of cetyltrimethylammonium chloride were mixed together and stirred at room temperature to hydrolyze and dissolve the tetramethoxysilane. Thereto was added, as a filler, 2 g of a 2% by mass aqueous dispersion of synthetic saponite (Sumecton SA, manufactured by Kunimine Industries Co., Ltd.), which had been produced beforehand. This mixture was evenly mixed. The resultant solution was poured into a closable vessel made of a tetrafluoroethylene/perfluoroalkoxyethylene copolymer (PFA), so as to result in a liquid level height of 1.1 mm. Thereafter, this vessel was allowed to stand still in an 80°C oven until the sol gelled. After 48 hours, the resultant gel-state compound was taken out of the vessel to obtain a hydrogel sheet.
This hydrogel sheet was subjected to solvent replacement with fresh ion-exchanged water and then to solvent replacement with mixed solvent of 25% by mass ethanol and 75% by mass water. Subsequently, similar solvent replacement was conducted while heightening the ethanol proportion to 50% by mass, 75% by mass, and 100% by mass. The solvent replacement was conducted while gently shaking the hydrogel immersed in a sufficient amount of the replacing solvent. The solvent replacement with ion-exchanged water and with each of the mixed solvents having respective ethanol proportions was performed over 24 hours or longer. With respect to 100% by mass ethanol, the solvent replacement was performed over 50 hours.
This ethanol gel sheet was subjected to carbon-dioxide supercritical drying to obtain an aerogel sheet. Specifically, a pressure vessel was filled with ethanol, and the ethanol gel sheet was gently placed therein. The vessel was lidded to form a closed system. Thereafter, liquefied carbon dioxide was introduced at 20°C and a rate of 10 mL/min, and the pressure was kept constant at 26 MPa with a back-pressure valve. This operation was continued for 24 hours. The temperature of the pressure vessel was then elevated to 50°C while maintaining the pressure of 26 MPa, thereby bringing the carbon dioxide into a supercritical state. Thereafter, carbon dioxide was continuously passed therethrough at a rate of 5 mL so as to maintain 26 MPa. The supercritical carbon dioxide began, at 3 hours thereafter, to be gradually purged, and the pressure was returned to ordinary pressure at 1 hour thereafter. The pressure vessel was opened, and the silica aerogel sheet was taken out. The silica aerogel sheet was vacuum-dried overnight in a 50°C vacuum oven. This silica aerogel sheet which had been just dried had a thickness of 1.0 mm. The pore diameter of the interconnected pores of the silica aerogel sheet and the porosity and elastic modulus in compression of the silica aerogel sheet were determined.

This silica aerogel sheet as a transparent heat-insulating layer was sandwiched from both sides with poly(vinyl butyral) (PVB) films having a thickness of 0.38 mm, and the resultant stack was sandwiched from both sides with soda-lime glass plates having a thickness of 1.0 mm (manufactured by Asahi Glass Co., Ltd.). This stack was placed in a bag for vacuum packaging, which was evacuated at a reduced pressure to remove any air remaining at the interfaces between the layers. This stack was temporarily bonded at 120°C for 30 minutes to obtain a laminate. Next, the laminate was placed in an autoclave and tenaciously bonded at 120°C and 1.3 MPa for 90 minutes, thereby obtaining a laminated glass. The transparent heat-insulating layer was ascertained not to suffer a compressive deformation when stuck to the glass plates, and the laminated glass was examined for transmittance and U value. The results thereof are shown in Table 4.

(Example 2)

A silica aerogel sheet was obtained in the same manner as in Example 1, except that the amount of tetramethoxysilane was changed to 1.2 g and the solution was introduced into the vessel so as to result in a liquid level height of 1.3 mm. The silica aerogel sheet which had been just dried had a thickness of 1.2 mm. The pore diameter of the interconnected pores of the silica aerogel sheet and the porosity and elastic modulus in compression of the silica aerogel sheet were determined.

This silica aerogel sheet as a transparent heat-insulating layer was sandwiched from both sides with PVB films having a thickness of 0.38 mm, and the resultant stack was sandwiched from both sides with soda-lime glass plates having a thickness of 2.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 4.

(Example 3)

A silica aerogel sheet was obtained in the same manner as in Example 1, except that the solution was introduced into the vessel so as to result in a liquid level height of 6.5 mm and the gelation was conducted at a room temperature of 25°C over 160 hours. The silica aerogel sheet which had been just dried had a thickness of 6.0 mm. The pore diameter of the interconnected pores of the silica aerogel sheet and the porosity and elastic modulus in compression of the silica aerogel sheet were determined.

This silica aerogel sheet as a transparent heat-insulating layer was sandwiched from both sides with PVB films having a thickness of 0.10 mm, and the resultant stack was sandwiched from both sides with soda-lime glass plates having a thickness of 2.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 4.

(Example 4)

A silica aerogel sheet was obtained in the same manner as in Example 1, except that the amount of tetramethoxysilane was changed to 5.2 g and the solution was introduced into the vessel so as to result in a liquid level height of 2.1 mm and that the gelation conditions were changed to 60°C and 76 hours. The silica aerogel sheet which had been just dried had a thickness of 2.0 mm. The pore diameter of the interconnected pores of the silica aerogel sheet and the porosity and elastic modulus in compression of the silica aerogel sheet were determined.

This silica aerogel sheet as a transparent heat-insulating layer was sandwiched from both sides with PVB films having a thickness of 0.38 mm, and the resultant stack was sandwiched from both sides with a soda-lime glass plate having a thickness of 1.0 mm and a soda-lime glass plate having a thickness of 3.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 4.

(Example 5)

In the same manner as the method described in Japanese Patent No. 4998981, the following procedure was performed. An undried, sulfurous-acid-bleached, soft wood pulp (2 g in terms of dry mass), 0.025 g of 2,2,6,6-tetramethylpiperidine-1-oxyl (TEMPO), and 0.25 g of sodium bromide were dispersed in 150 mL of water. Thereafter, a 13% by mass aqueous solution of sodium hypochlorite was added thereto in an amount of 2.5 mmol in terms of sodium hypochlorite amount per g of the pulp to initiate a reaction. During the reaction, 0.5 M aqueous sodium hydroxide solution was added dropwise thereto to keep the pH at 10. At the time when the pH came not to change, the reaction was regarded as having ended. The reaction product was taken out by filtration with a glass filter and then repeatedly subjected 10 times to washing with a sufficient amount of water and filtration. Thus, an oxidized pulp impregnated with water and having a solid content of 25% by mass was obtained.

Water was added to the oxidized pulp to obtain a 2% by mass slurry, which was treated with a rotary blade type homogenizer for 10 minutes. As a result of the treatment, the slurry had a significantly increased viscosity. While adding water little by little, the slurry was hence continuously treated, for dispersing the pulp, with a mixer until the solid concentration decreased to 0.5% by mass. Subsequently, the slurry was treated with an ultrasonic homogenizer for 5 minutes and then centrifuged to remove coarse substances including unfibrillated pulp, thereby obtaining a dispersion of TEMPO-oxidized cellulose nanofibers. This dispersion was concentrated with an evaporator to obtain a dispersion having a solid concentration of 1% by mass.

One gram of synthetic saponite was added to 49 g of water, and this mixture was uniformly dispersed with an ultrasonic homogenizer (US-600T, manufactured by NiSSEi Ltd.) for 10 minutes to obtain a synthetic-saponite dispersion.

Five grams of the synthetic-saponite dispersion was added as a filler to 2 g of the dispersion of TEMPO-oxidized cellulose nanofibers. This mixture was sufficiently stirred and then poured into a closable vessel made of a PFA, so as to result in a liquid level height of 2.5 mm. Ten milliliters of 1 M hydrochloric acid was gently poured into the vessel along a wall thereof, and this vessel was allowed to stand still for 10 hours. Thus, a cellulose hydrogel sheet was obtained.

This cellulose hydrogel sheet was subjected to solvent replacement with ethanol and to carbon-dioxide supercritical drying in the same manner as in Example 1. The cellulose aerogel sheet which had been just dried had a thickness of 2.2 mm. The pore diameter of the interconnected pores of the cellulose aerogel sheet and the porosity and elastic modulus in compression of the cellulose aerogel sheet were determined.

This cellulose aerogel sheet as a transparent heat-insulating layer was sandwiched from both sides with PVB films having a thickness of 0.10 mm, and the resultant stack was sandwiched from both sides with soda-lime glass plates having a thickness of 2.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 4.

(Example 6)

A cellulose aerogel sheet was obtained in the same manner as in Example 5, except that the solution was introduced into the vessel so as to result in a liquid level height of 0.6 mm, the concentration of the hydrochloric acid to be used for gelation was changed to 0.1 M, and the vessel was allowed to stand still for 30 hours. The cellulose aerogel sheet which had been just dried had a thickness of 0.5 mm. The pore diameter of the interconnected pores of the cellulose aerogel sheet and the porosity and elastic modulus in compression of the cellulose aerogel sheet were determined.

This cellulose aerogel sheet as a transparent heat-insulating layer was sandwiched from both sides with PVB films having a thickness of 0.38 mm, and the resultant stack was sandwiched from both sides with soda-lime glass plates having a thickness of 6.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 4.

(Example 7)

A cellulose ethanol-gel sheet produced in the same manner as in Example 6 except that the solution was introduced so as to result in a liquid level height of 1.5 mm was gradually air-dried at ordinary pressure and room temperature over one month, without being subjected to supercritical drying. Thus, a cellulose xerogel sheet was obtained. The cellulose xerogel sheet which had been just dried had a thickness of 1.2 mm. The pore diameter of the interconnected pores of the cellulose xerogel sheet and the porosity and elastic modulus in compression of the cellulose xerogel sheet were determined.

The cellulose xerogel sheet as a transparent heat-insulating layer was sandwiched from both sides with two laminated sheets of a PVB film having a thickness of 0.38 mm and four laminated sheets of a PVB film having a thickness of 0.76 mm, and the resultant stack was sandwiched from both sides with soda-lime glass plates having a thickness of 3.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 4.

[Table 4]

Table 4

| | | Example | | | | | | |
|---|---|---|---|---|---|---|---|---|
| | | 1 | 2 | 3 | 4 | 5 | 6 | 7 |
| Pore diameter D (nm) | | 90 | 91 | 49 | 65 | 32 | 28 | 51 |
| Porosity P | | 0.92 | 0.74 | 0.92 | 0.59 | 0.95 | 0.94 | 0.91 |
| Thickness of transparent heat-insulating layer $d_i$ (mm) | | 1 | 1.2 | 6 | 2 | 2.2 | 0.5 | 1.2 |
| Total thickness of glass plates $d_g$ (mm) | | 2 | 4 | 4 | 4 | 4 | 12 | 6 |
| Total thickness of transparent adhesive layers $d_a$ (mm) | | 0.76 | 0.76 | 0.2 | 0.76 | 0.2 | 0.76 | 3.8 |
| Transparent heat-insulating layer | | 8.6 | 11.2 | 12.1 | 11.6 | 13.2 | 12.0 | 11.5 |
| Elastic modulus in compression (MPa) | | | | | | | | |
| Collapse resistance of transparent heat-insulating layer | | good | good | good | good | good | good | good |
| Value of $A/10^5$ | | 6.7 | 6.9 | 6.5 | 3.2 | 0.7 | 0.1 | 1.4 |
| Evaluation of value of A | | good | good | good | good | excellent | excellent | excellent |
| Transmittance of laminated glass $T_L$ (%) | | 50.9 | 50.3 | 52.6 | 67.3 | 79.9 | 83.4 | 75.3 |
| Value of B | | 79.4 | 43.1 | 706.3 | 39.8 | 435.6 | 117.9 | 141.2 |
| Evaluation of value of B | | good | good | excellent | good | excellent | excellent | excellent |
| U value (W/m$^2$K) | | 4.1 | 4.8 | 1.1 | 4.9 | 1.7 | 3.5 | 3.3 |
| Comprehensive evaluation | | good | good | good | good | excellent | excellent | excellent |

(Example 8)

In 90 g of cyclohexanone were dissolved 2 g of A-HD-N (manufactured by Shin-Nakamura Chemical Co., Ltd.), 4 g of A-DPH (manufactured by Shin-Nakamura Chemical Co., Ltd.), and 4 g of UA-160TM (manufactured by Shin-Nakamura Chemical Co., Ltd.), as UV-curable monomer and oligomer ingredients, and 0.3 g of IRGACURE (registered trademark) 184 (manufactured by BASF A.G.) as a photoinitiator. This solution was cured by irradiation with ultraviolet rays from a UV lamp at 100 J/cm$^2$, thereby obtaining a polymer organogel sheet.

The polymer organogel sheet was subjected to solvent replacement for replacing the cyclohexane with ethanol and to carbon-dioxide supercritical drying in the same manner as in Example 1 to obtain a polymer aerogel sheet having a thickness of 2.0 mm. The pore diameter of the interconnected pores of the polymer aerogel sheet and the porosity and elastic modulus in compression of the polymer aerogel sheet were determined.

The polymer aerogel sheet as a transparent heat-insulating layer was sandwiched from both sides with PVB films having a thickness of 0.76 mm, and the resultant stack was sandwiched from both sides with soda-lime glass plates having a thickness of 2.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 5.

(Example 9)

Five grams of methyltrimethoxysilane (manufactured by Tokyo Kasei Kogyo Co., Ltd.), 20 g of 5 mM aqueous acetic acid solution, 2 g of urea, and 0.5 g of cetyltrimethylammonium bromide were mixed together at room temperature. This mixture was stirred for 60 minutes to hydrolyze and dissolve the methyltrimethoxysilane. Thereto was added, as a filler, 2 g of a 1% by mass aqueous dispersion of synthetic saponite (Sumecton SA, manufactured by Kunimine Industries Co., Ltd.). This mixture was evenly mixed. The resultant solution was poured into a closable vessel made of a tetrafluoroethylene/perfluoroalkoxyethylene copolymer (PFA), so as to result in a liquid level height of 0.8 mm. Thereafter, this vessel was allowed to stand still in a 60°C oven until the sol gelled. After 3 days, the resultant gel-state compound was taken out of the vessel to obtain a hydrogel sheet.

This hydrogel sheet was immersed in methanol within a closed vessel made of stainless steel. The methanol within the vessel was replaced with fresh methanol every day. After four repetitions of the methanol replacement, a methanol gel was obtained. Using hexane in place of that solvent, similar solvent replacement was repeatedly performed four times to replace the solvent in the methanol gel with hexane, thereby obtaining a hexane gel. The hexane gel was placed in a 60°C oven and dried for 24 hours at ordinary pressure and was subsequently vacuum-dried at 150°C for 2 hours to obtain a xerogel sheet having a thickness of 0.6 mm. The pore diameter of the interconnected pores of the xerogel sheet and the porosity and elastic modulus in compression thereof were determined.

This xerogel sheet as a transparent heat-insulating layer was sandwiched from both sides with PVB films having a thickness of 0.38 mm, and the resultant stack was sandwiched from both sides with soda-lime glass plates having a thickness of 2.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 5.

(Example 10)

Five grams of 1,6-bis(trimethoxysilyl)hexane (manufactured by Tokyo Kasei Kogyo Co., Ltd.) and 30 g of N,N-dimethylformamide were introduced into a plastic vessel containing a magnetic stirrer. The contents were stirred at room temperature for 1 minute. Thereto was added 1 g of a 2% by mass aqueous synthetic-saponite dispersion which had been produced beforehand. The contents were evenly mixed at room temperature for 1 minute. Thereto was added 1 g of a 0.75 mol/L aqueous solution of tetramethylammonium hydroxide. The contents were stirred for 5 seconds at a rotational speed of 1,500 rpm to obtain a mixture. The mixture was poured into a tray made of polypropylene. This tray containing the mixture was placed in a closable vessel made of stainless steel. The vessel was lidded and, in the closed state, placed in a 60°C oven to allow gelation to proceed. After 3 days, the vessel was taken out of the oven, and the wet gel within the tray was immersed in methanol within a closed vessel made of stainless steel. The methanol within the vessel was replaced with fresh methanol every day. After four repetitions of the methanol replacement, a methanol gel was obtained. Using hexane in place of that solvent, similar solvent replacement was repeatedly performed four times to replace the solvent in the methanol gel with hexane, thereby obtaining a hexane gel. The hexane gel was placed in a 60°C oven and dried for 24 hours at ordinary pressure to obtain a xerogel sheet having a thickness of 0.8 mm. The pore diameter of the interconnected pores of the xerogel sheet and the porosity and elastic modulus in compression thereof were determined.

This xerogel sheet as a transparent heat-insulating layer was sandwiched from both sides with PVB films having a thickness of 0.38 mm, and the resultant stack was sandwiched from both sides with soda-lime glass plates having a thickness of 2.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 5.

(Example 11)

One gram of tetramethoxysilane, 4 g of ethanol, 4 g of water, 1.5 g of urea, and 0.5 g of cetyltrimethylammonium bromide were mixed together and stirred at room temperature to hydrolyze and dissolve the tetramethoxysilane. Thereto was added, as a filler, 2 g of an alumina sol (F-1000, manufactured by Kawaken Fine Chemicals Co., Ltd.; solid concentration, 5% by mass). This mixture was mixed for 30 minutes. The resultant solution was poured into a closable vessel made of a tetrafluoroethylene/perfluoroalkoxyethylene copolymer (PFA), so as to result in a liquid level height of 1.1 mm. Thereafter, this vessel was allowed to stand still in an 80°C oven until the sol gelled. After 48 hours, the resultant gel-state compound was taken out of the vessel to obtain a hydrogel sheet.

This hydrogel sheet was subjected to solvent replacement and supercritical drying in the same manner as in Example 1, thereby obtaining a silica aerogel sheet having a thickness of 1.0 mm. The pore diameter of the interconnected pores of the silica aerogel sheet and the porosity and elastic modulus in compression thereof were determined.

This silica aerogel sheet as a transparent heat-insulating layer was sandwiched from both sides with PVB films having a thickness of 0.38 mm, and the resultant stack was sandwiched from both sides with soda-lime glass plates having a thickness of 2.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 5.

(Example 12)

One gram of tetramethoxysilane, 4 g of ethanol, 4 g of water, 1.5 g of urea, and 0.5 g of cetyltrimethylammonium bromide were mixed together and stirred at room temperature to hydrolyze and dissolve the tetramethoxysilane. Thereto was added, as a filler, 2 g of an aqueous dispersion of carboxymethyl cellulose (BiNFi-s CMC, manufactured by Sugino Machine Ltd.), the aqueous dispersion having a solid concentration of 1% by mass. This mixture was mixed for 30 minutes. The resultant solution was poured into a closable vessel made of a tetrafluoroethylene/perfluoroalkoxyethylene copolymer (PFA), so as to result in a liquid level height of 1.1 mm. Thereafter, this vessel was allowed to stand still in an 80°C oven until the sol gelled. After 48 hours, the resultant gel-state compound was taken out of the vessel to obtain a hydrogel sheet.

This hydrogel sheet was subjected to solvent replacement and supercritical drying in the same manner as in Example 1, thereby obtaining a silica aerogel sheet having a thickness of 1.0 mm. The pore diameter of the interconnected pores of the silica aerogel sheet and the porosity and elastic modulus in compression thereof were determined.

This silica aerogel sheet as a transparent heat-insulating layer was sandwiched from both sides with PVB films having a thickness of 0.38 mm, and the resultant stack was sandwiched from both sides with soda-lime glass plates having a thickness of 3.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 5.

(Example 13)

A cellulose hydrogel sheet was obtained and subjected to solvent replacement with ethanol, in the same manner as in Example 5. Thereafter, this sheet was further subjected to solvent replacement with cyclohexane to obtain a cellulose cyclohexane-gel sheet. This gel sheet was frozen in a -30°C refrigerator for 16 hours, subsequently placed in a vacuum dryer, and freeze-dried under vacuum at -30°C for 2 days. The cellulose xerogel sheet which had been just dried had a thickness of 1.2 mm. The pore diameter of the interconnected pores of the cellulose xerogel sheet and the porosity and elastic modulus in compression of the cellulose cryogel sheet were determined.

This cellulose cryogel sheet as a transparent heat-insulating layer was sandwiched from both sides with PVB films having a thickness of 0.38 mm, and the resultant stack was sandwiched from both sides with soda-lime glass plates having a thickness of 2.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 5.

(Example 14)

A cellulose aerogel sheet having a thickness of 2.2 mm was obtained in the same manner as in Example 5, except that 3 g of a 2% by mass aqueous dispersion of montmorillonite (Kunipia F, manufactured by Kunimine Industries Co., Ltd.) was added as a filler in place of the aqueous saponite dispersion. The pore diameter of the interconnected pores of the cellulose aerogel sheet and the porosity and elastic modulus in compression thereof were determined.

This cellulose aerogel sheet as a transparent heat-insulating layer was sandwiched from both sides with PVB films having a thickness of 0.38 mm, and the resultant stack was sandwiched from both sides with soda-lime glass plates having a thickness of 2.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 5.

[Table 5]

Table 5

| | Example | | | | | | |
|---|---|---|---|---|---|---|---|
| | 8 | 9 | 10 | 11 | 12 | 13 | 14 |
| Pore diameter D (nm) | 50 | 105 | 98 | 89 | 75 | 68 | 67 |
| Porosity P | 0.89 | 0.85 | 0.92 | 0.9 | 0.91 | 0.85 | 0.87 |

(continued)

| | Example | | | | | | |
|---|---|---|---|---|---|---|---|
| | 8 | 9 | 10 | 11 | 12 | 13 | 14 |
| Thickness of transparent heat-insulating layer $d_i$ (mm) | 2 | 0.6 | 0.8 | 1 | 1 | 1.2 | 2.2 |
| Total thickness of glass plates $d_g$ (mm) | 4 | 4 | 4 | 4 | 6 | 4 | 4 |
| Total thickness of transparent adhesive layers $d_a$ (mm) | 1.52 | 0.76 | 0.76 | 0.76 | 0.76 | 0.76 | 0.76 |
| Transparent heat-insulating layer | 10.3 | 4.3 | 10.2 | 7.8 | 9.2 | 10.3 | 5.8 |
| Elastic modulus in compression (MPa) | | | | | | | |
| Collapse resistance of transparent heat-insulating layer | good | good | good | good | good | good | good |
| Value of $A/10^5$ | 2.2 | 5.9 | 6.9 | 6.3 | 3.8 | 3.2 | 5.8 |
| Evaluation of value of A | excellent | good | good | good | good | good | good |
| Transmittance of laminated glass $T_L$ (%) | 71.6 | 59.2 | 50.2 | 52.4 | 61.8 | 65.1 | 58.4 |
| Value of B | 204.4 | 35.4 | 63.4 | 75.1 | 89.8 | 82.9 | 163.7 |
| Evaluation of value of B | excellent | good | good | good | excellent | good | excellent |
| U value (W/m$^2$K) | 2.7 | 5.0 | 4.5 | 4.2 | 3.9 | 4.1 | 3.4 |
| Comprehensive evaluation | excellent | good | good | good | good | good | good |

(Comparative Example 1)

A silica aerogel sheet having a thickness of 1.2 mm was obtained in the same manner as in Example 1, except that 4 g of water was additionally incorporated in place of the 4 g of ethanol and that the gelation was conducted so as to result in a liquid level height of 1.4 mm. The pore diameter of the interconnected pores of the silica aerogel sheet and the porosity and elastic modulus in compression of the silica aerogel sheet were determined.

This silica aerogel sheet as a transparent heat-insulating layer was sandwiched from both sides with PVB films having a thickness of 0.38 mm, and the resultant stack was sandwiched from both sides with soda-lime glass plates having a thickness of 2.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 6.

(Comparative Example 2)

A silica aerogel sheet having a thickness of 1.0 mm was obtained in the same manner as in Example 1, except that the amount of the tetramethoxysilane was changed to 7.2 g. The pore diameter of the interconnected pores of the silica aerogel sheet and the porosity and elastic modulus in compression of the silica aerogel sheet were determined.

This silica aerogel sheet as a transparent heat-insulating layer was sandwiched from both sides with PVB films having a thickness of 0.38 mm, and the resultant stack was sandwiched from both sides with soda-lime glass plates having a thickness of 2.0 mm. A laminated glass was produced therefrom in the same manner as in Example 1. The transparent heat-insulating layer was ascertained not to suffer a compressive deformation when stuck to the glass plates, and the laminated glass was examined for transmittance and U value. The results thereof are shown in Table 6.

(Comparative Example 3)

A silica aerogel sheet having a thickness of 1.0 mm was obtained in the same manner as in Example 5, except that 5 g of water was added in place of the 5 g of the synthetic-saponite dispersion and that the solution was introduced so as to result in a liquid level height of 1.5 mm. The pore diameter of the interconnected pores of the silica aerogel sheet and the porosity and elastic modulus in compression of the silica aerogel sheet were determined.

This silica aerogel sheet as a transparent heat-insulating layer was sandwiched from both sides with PVB films having a thickness of 0.38 mm, and the resultant stack was sandwiched from both sides with soda-lime glass plates having a thickness of 2.0 mm. A laminated glass was produced therefrom in the same manner as in Example 1. The transparent heat-insulating layer collapsed to blush when stuck to the glass plates. The results thereof are shown in Table 6.

(Comparative Example 4)

One PVB film having a thickness of 0.76 mm was sandwiched between two soda-lime glass plates having a thickness of 2.0 mm without interposing any transparent heat-insulating layer between the glass plates, and a laminated glass was produced therefrom in the same manner as in Example 1. The laminated glass was examined for transmittance and U value. The results thereof are shown in Table 6.

[Table 6]

Table 6

|  | Comparative Example | | | |
|---|---|---|---|---|
|  | 1 | 2 | 3 | 4 |
| Pore diameter D (nm) | 150 | 90 | 90 | - |
| Porosity P | 0.71 | 0.41 | 0.72 | - |
| Thickness of transparent heat-insulating layer $d_i$ (mm) | 1.2 | 1 | 1 | - |
| Total thickness of glass plates $d_g$ (mm) | 4 | 4 | 4 | 4 |
| Total thickness of transparent adhesive layers $d_a$ (mm) | 0.76 | 0.76 | 0.76 | 0.76 |
| Transparent heat-insulating layer | 7.3 | 8.1 | 1.2 | - |
| Elastic modulus in compression (MPa) | | | | |
| Collapse resistance of transparent heat-insulating layer | good | good | poor | - |
| Value of $A/10^5$ | 29.3 | 2.9 | 5.1 | - |
| Evaluation of value of A | poor | good | good | - |
| Transmittance of laminated glass $T_L$ (%) | 6.1 | 68.2 | 5.7 | 84.2 |
| Value of B | 30.6 | 12 | 31.4 | - |
| Evaluation of value of B | poor | poor | poor | - |
| U value (W/m$^2$K) | 5.1 | 5.6 | 5.6 | 5.8 |
| Comprehensive evaluation | poor | poor | poor | poor |

The laminated glasses of Examples 1 to 10, which each had a value of A of $7.0 \times 10^5$ or smaller and a value of B of 35 or larger, had high transparency and excellent heat-insulating properties.
The laminated glass of Comparative Example 1, which had a value of A exceeding $7.0 \times 10^5$ and a value of B smaller than 35, showed low transparency and poor heat-insulating properties.
The laminated glasses of Comparative Examples 2 and 3, which each had a value of B smaller than 35, showed poor heat-insulating properties.
In the laminated glass of Comparative Example 3, in which the transparent heat-insulating layer had had an elastic modulus in compression less than 4.3 MPa, the transparent heat-insulating layer had collapsed to blush when stuck to the glass plates. This laminated glass hence had a reduced transmittance.
The laminated glass of Comparative Example 4, which included no transparent heat-insulating layer, had poor heat-insulating properties.
This application is based on a Japanese patent application filed on November 26, 2015 (Application No. 2015-231011), the contents thereof being incorporated herein by reference.

Industrial Applicability

The laminated glass of the invention is useful as vehicular window glasses including window glasses for automobiles (windshields, roof windows, ascending/descending windows, lateral fixed windows, backlights, roof windows, etc.) and window glasses for railroad cars, window glasses for buildings, etc.

Description of the Reference Numerals

| | |
|---|---|
| 1 | Laminated glass |
| 10 | First glass plate |
| 12 | Second glass plate |
| 14 | Transparent heat-insulating layer |
| 16 | First transparent adhesive layer |
| 18 | Second transparent adhesive layer |

## Claims

1.  A laminated glass comprising, in the following order, a first glass plate, a first transparent adhesive layer, a transparent heat-insulating layer having interconnected pores, a second transparent adhesive layer, and a second glass plate, and having
    a value of A represented by the following expression (1) of $7.0 \times 10^5$ or smaller and
    a value of B represented by the following expression (2) of 35 or larger,
    [Math. 1]

    $$A = D^3 P d_i \quad (1)$$

    $$B = d_g + 3.3 d_a + 0.75 d_i \left( \frac{D + 260.8}{0.026D} \right)^P \quad (2)$$

    wherein D is a pore diameter (nm) of the interconnected pores of the transparent heat-insulating layer, P is a porosity of the transparent heat-insulating layer, $d_i$ is a thickness (mm) of the transparent heat-insulating layer, $d_g$ is a sum (mm) of a thickness of the first glass plate and a thickness of the second glass plate, and $d_a$ is a sum (mm) of a thickness of the first transparent adhesive layer and a thickness of the second transparent adhesive layer.

2.  The laminated glass according to claim 1, wherein the value of A is $2.5 \times 10^5$ or smaller and the value of B is 85 or larger.

3.  The laminated glass according to claim 1 or 2, wherein the transparent heat-insulating layer has an elastic modulus in compression of 4.3 MPa or higher.

4.  The laminated glass according to any one of claims 1 to 3, wherein the transparent heat-insulating layer is an aerogel sheet.

5.  The laminated glass according to any one of claims 1 to 4, wherein the transparent heat-insulating layer contains a filler.

6.  The laminated glass according to any one of claims 1 to 5, wherein the thickness of the transparent heat-insulating layer is 0.2 to 10 mm.

7.  The laminated glass according to any one of claims 1 to 6, wherein the thickness of the first glass plate and the thickness of the second glass plate are each 0.1 to 6 mm.

8.  The laminated glass according to any one of claims 1 to 7, wherein the thickness of the first transparent adhesive layer and the thickness of the second transparent adhesive layer are each 0.1 to 3 mm.

9. A window glass for automobiles which comprises the laminated glass according to any one of claims 1 to 8.

10. A window glass for buildings which comprises the laminated glass according to any one of claims 1 to 8.

FIG. 1

## INTERNATIONAL SEARCH REPORT

International application No.

PCT/JP2016/084809

### A. CLASSIFICATION OF SUBJECT MATTER
*C03C27/12*(2006.01)i, *B32B17/06*(2006.01)i, *B60J1/00*(2006.01)i, *E06B3/67* (2006.01)i, *E06B5/00*(2006.01)i

According to International Patent Classification (IPC) or to both national classification and IPC

### B. FIELDS SEARCHED

Minimum documentation searched (classification system followed by classification symbols)
C03C27/12, B32B17/06, B60J1/00, E06B3/67, E06B5/00

Documentation searched other than minimum documentation to the extent that such documents are included in the fields searched
Jitsuyo Shinan Koho 1922–1996 Jitsuyo Shinan Toroku Koho 1996–2017
Kokai Jitsuyo Shinan Koho 1971–2017 Toroku Jitsuyo Shinan Koho 1994–2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2013/168714 A1 (Konica Minolta, Inc.), 14 November 2013 (14.11.2013), entire text & JP 5994849 B2 & EP 2848595 A1 | 1–10 |
| A | JP 2010-100778 A (Denki Kagaku Kogyo Kabushiki Kaisha), 06 May 2010 (06.05.2010), entire text (Family: none) | 1–10 |
| A | JP 2009-285864 A (Bridgestone Corp.), 10 December 2009 (10.12.2009), entire text; all drawings (Family: none) | 1–10 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 January 2017 (30.01.17) | 07 February 2017 (07.02.17) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2016/084809 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 08-283049 A  (Bridgestone Corp.), 29 October 1996 (29.10.1996), entire text; all drawings (Family: none) | 1-10 |
| A | JP 2007-327320 A  (Sekisui Chemical Co., Ltd.), 20 December 2007 (20.12.2007), entire text; all drawings (Family: none) | 1-10 |
| A | WO 2015/094575 A1  (CABOT CORP.), 25 June 2015 (25.06.2015), entire text; all drawings & US 2016/0319588 A1 | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013168714 A
- JP 4848872 B
- JP 2007148330 A
- JP 2010222233 A
- WO 2012063881 A
- JP 4998981 B
- WO 2015231011 A

**Non-patent literature cited in the description**

- *Kōbunshi Ronbun-shū,* 2010, vol. 67 (7), 390-396
- **G. WEI et al.** *International Journal of Heat and Mass Transfer,* 2011, vol. 54, 2355-2366
- Thermal conductivity measurement of gas hydrate imitation sediment sample. Technical Meeting in Department of Applied Molecular Chemistry, Program 5-8. College of Industrial Technology, Nihon University, 2004